# EUROPÄISCHE PATENTANMELDUNG

(11) **EP 3 024 218 A1**
(43) Veröffentlichungstag der Anmeldung: **25.05.2016**
(21) Anmeldenummer: 15201765.3
(22) Anmeldetag: 08.10.2010
(51) Int. Cl.: H04N 5/232, H04N 21/20

(54) **GPS/VIDEO-DATENKOMMUNIKATIONSSYSTEM, DATENKOMMUNIKATIONSVERFAHREN, SOWIE VORRICHTUNG ZUR VERWENDUNG IN EINEM GPS/VIDEO DATENKOMMUNIKATIONSSYSTEM**

(30) Priorität: 21.10.2009 DE 102009050187
(62) Teilanmeldung aus: 10768871.5
(71) Anmelder: TomTom International B.V., 1011 AC Amsterdam (NL)
(72) Erfinder: KRAMER, Tobias, 1011AC Amsterdam (NL); RISTIC, Aleksandar, 1011AC Amsterdam (NL)
(74) Vertreter: Dobson, Adrian

(57) **Zusammenfassung**

Die Erfindung betrifft ein GPS- und/oder Video-Datenkommunikationssystem, ein Datenkommunikationsverfahren, sowie Vorrichtung zur Verwendung in einem GPS- und/oder Video-Datenkommunikationssystem, insbesondere ein Datenkommunikationsverfahren, welches die folgenden Schritte aufweist: (a) Bereitstellen von durch eine Videokamera (2) aufgenommen Bilddaten (9;19); und (b) Integration zusätzlicher Bilddaten (7a,7b,8;15) in die von der Videokamera (2) aufgenommen Bilddaten. Alternativ oder zusätzlich kann das Datenkommunikationsverfahren den folgenden Schritt aufweisen: Integration von von einer Messeinrichtung (4) gewonnen oder hieraus erzeugten Daten in die von der Videokamera (2) aufgenommenen Bilddaten.

## Beschreibung

Die Erfindung betrifft ein GPS- und/oder Video-Datenkommunikationssystem, ein Datenkommunikationsverfahren, sowie Vorrichtungen zur Verwendung in einem GPS- und/oder Video-Datenkommunikationssystem.

Insbesondere betrifft die Erfindung ein GPS- und/oder Video-Datenkommunikationssystem, ein Datenkommunikationsverfahren, sowie Vorrichtungen zur Verwendung in einem GPS- und/oder Video-Datenkommunikationssystem, welche zusammen mit einer Videokamera verwendet werden können, bzw. GPS- und/oder Video-Datenkommunikationssysteme, -Verfahren und -Vorrichtungen, die als Bestandteil eine Videokamera aufweisen können.

Videokameras sind Geräte zur Bildaufnahme, insbesondere zur Aufnahme von Bewegtbildern, und deren fortlaufender Umwandlung in elektrische Signale.

Im weiteren Sinn können auch Digitalkameras als "Videokameras" bezeichnet werden.

Zur Aufzeichnung des Tones kann in eine Videokamera ein Mikrofon integriert sein; alternativ oder zusätzlich kann eine Videokamera einen oder mehrere Anschlüsse aufweisen, an die entsprechende Mikrofone angeschlossen werden können.

Alternativ oder zusätzlich kann in eine Videokamera auch ein Videorekorder integriert sein; eine derartige Videokamera wird i.A. als "Camcorder" bezeichnet.

Des Weiteren ist bereits bekannt, in Videokameras entsprechende GPS-Empfänger von GPS-Systemen zu integrieren.

GPS / Global Positioning Systeme basieren z.B. auf Satelliten, die mit kodierten Radiosignalen ständig ihre aktuelle Position und/oder die genaue Uhrzeit ausstrahlen. Aus den Signallaufzeiten bzw. der Uhrzeit können GPS-Empfänger dann z.B. ihre eigene Position und/oder Geschwindigkeit berechnen.

Theoretisch reichen dazu die Signale von drei Satelliten aus, da hieraus die genaue Position und Höhe eines GPS-Empfängers bestimmt werden kann.

In der Praxis weisen GPS-Empfänger i.d.R. keine Uhr auf, die genau genug ist, um die Laufzeiten mit ausreichender Genauigkeit messen zu können. Deshalb wird das Signal eines vierten Satelliten benötigt, mit dem dann auch die genaue Zeit im GPS-Empfänger bestimmt werden kann.

Zusätzlich zur Position kann mit Hilfe von GPS-Signalen auch die Geschwindigkeit eines GPS-Empfängers ermittelt werden, und/oder dessen Bewegungsrichtung, etc.

Des Weiteren ist bei vielen Videokameras ein Display vorgesehen, mit dem die aufgenommenen Bewegtbilder / Videos betrachtet werden können.

Zur Aufnahme von Action-Szenen - beispielsweise beim Skifahren, Snowboarden, Fahrradfahren, insbesondere Mountain-Biken, Surfen, Wasserskifahren, Motorbootfahren, Segeln, Autofahren, Motorradfahren, etc., etc. - werden möglichst kleine und leichte Videokameras verwendet.

Häufig werden derartige Videokameras bei der Aufnahme nicht in der Hand gehalten, sondern z.B. an einem Helm, an der Kleidung, etc. befestigt.

Immer häufiger werden von einer Videokamera aufgenommene Bewegtbilder / Videos ins Internet eingestellt, z.B. bei Internet-Plattformen wie Youtube® (http://www.youtube.com), etc.

Wunsch vieler Nutzer von Videokameras ist somit, die aufgenommen Bewegtbilder / Videos auf einfache Weise - möglichst "spektakulär" - aufzubereiten.

Die Erfindung hat zur Aufgabe, ein neuartiges GPS- und/oder Video-Datenkommunikationssystem, ein neuartiges Datenkommunikationsverfahren, sowie neuartige Vorrichtungen zur Verwendung in einem GPS- und/oder Video-Datenkommunikationssystem zur Verfügung zu stellen.

Sie erreicht dieses und/oder weitere Ziele durch die Gegenstände der unabhängigen Ansprüche. Vorteilhafte Weiterbildungen der Erfindung sind in den Unteransprüchen angegeben.

Gemäß einem Aspekt der Erfindung wird ein Datenkommunikationsverfahren bereitgestellt, welches die folgenden Schritte aufweist: (a) Bereitstellen von durch eine Videokamera aufgenommenen Bilddaten, und (b) Integration zusätzlicher Bilddaten in die von der Videokamera aufgenommenen Bilddaten.

Alternativ oder zusätzlich kann das Datenkommunikationsverfahren z.B. den folgenden Schritt aufweisen: Integration von von einer Messeinrichtung, z.B. einem GPS-Empfänger gewonnenen oder hieraus erzeugten Daten in die von der Videokamera aufgenommenen Bilddaten.

Vorteilhaft ist die Messeinrichtung ein GPS-Empfänger bzw. weist einen GPS-Empfänger auf.

Vorteilhaft ist die Messeinrichtung eine Geschwindigkeits- bzw. Beschleunigungsmesseinrichtung und/oder eine Temperaturmesseinrichtung und/oder eine Zeitmesseinrichtung und/oder eine Herzfrequenzmesseinrichtung und/oder eine barometrische Höhenmesseinrichtung ist, oder weist eine solche auf.

Vorteilhaft werden die zusätzlichen Bilddaten vorab in einem Rechner und/oder Server abgespeichert.

Vorteilhaft sind die zusätzlichen Bilddaten einer von mehreren vorab bestimmten Kategorien zugeordnet.

Vorteilhaft ist die eine von mehreren vorab bestimmten Kategorien die Kategorie Skifahren, und/oder Snowboarden, und/oder Fahrradfahren, insbesondere Mountain-Biken, und/oder Surfen, und/oder Wasserskifahren, und/oder Motorbootfahren, und/oder Segeln, und/oder Autofahren, und/oder Motorradfahren, und/oder Fliegen, und/oder Fallschirmspringen, und/oder Paragliden, und/oder Drachenfliegen.

Gemäß einem weiteren Aspekt der Erfindung wird ein GPS- und/oder Video-Datenkommunikationssystem zur Verfügung gestellt, welches aufweist:
eine Einrichtung zur Integration zusätzlicher Bilddaten in von einer Videokamera aufgenommene Bilddaten.

Vorteilhaft weist die Einrichtung einen Rechner und/oder einen Server auf.

Vorteilhaft weist das GPS- und/oder Video-Datenkommunikationssystem zusätzlich eine Einrichtung auf zur Integration von von einer Messeinrichtung gewonnenen oder hieraus erzeugten Daten in die von der Videokamera aufgenommenen Bilddaten.

Vorteilhaft ist die Einrichtung zur Integration von von der Messeinrichtung gewonnenen oder den hieraus erzeugten Daten ein Rechner und/oder ein Server bzw. weist einen solchen auf.

Die Erfindung wird nun durch mehrere Ausführungsbeispiele sowie die beigefügte Zeichnung näher erläutert. In der Zeichnung zeigt:
- Fig. 1: eine schematische beispielhafte Darstellung eines GPS- und/oder Video-Datenkommunikationssystems gemäß einem Ausführungsbeispiel der vorliegenden Erfindung;
- Fig. 2: eine beispielhafte Darstellung von beim Datenkommunikationssystem zur Bearbeitung aufgenommener Video-Bilddaten verwendbaren zusätzlichen Bilddaten / "Skin"-Bilddaten;
- Fig. 3: eine beispielhafte Darstellung von nach der Integration zusätzlicher Bilddaten / "Skin"-Bilddaten in beim Autofahren aufgenommene Video-Bilddaten angezeigten Daten;
- Fig. 4: eine beispielhafte Darstellung von nach der Integration zusätzlicher Bilddaten / "Skin"-Bilddaten in beim Fahrradfahren aufgenommene Video-Bilddaten angezeigten Daten;
- Fig. 5: eine beispielhafte Darstellung von nach der Integration zusätzlicher Bilddaten / "Skin"-Bilddaten in beim Skifahren aufgenommene Video-Bilddaten angezeigten Daten;
- Fig. 6a - 6f: eine beispielhafte Darstellung von an einer Anzeigevorrichtung eines Rechners eines Nutzers jeweils angezeigten Daten, zur Erläuterung von bei der Bearbeitung aufgenommener Video-Bilddaten beispielhaft durchgeführten Verfahrens-Schritten.

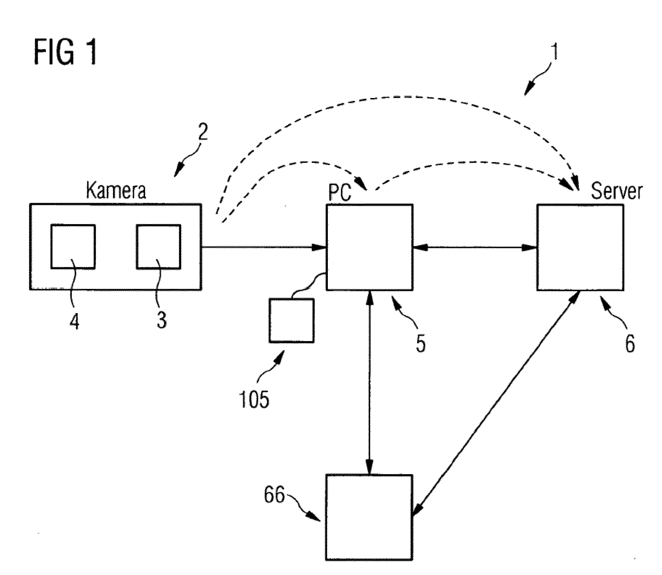

In Figur 1 ist schematisch ein beispielhafte Darstellung eines GPS- und/oder Video-Datenkommunikationssystems 1 gemäß einem Ausführungsbeispiel der vorliegenden Erfindung gezeigt.

Das System 1 weist eine Videokamera bzw. Digitalkamera 2 auf.

Die Videokamera 2 kann ein Display aufweisen, mit dem die von der Videokamera aufgenommenen Bewegtbilder / Videos - bei und/oder nach der Aufnahme - betrachtet werden können. Alternativ kann - z.B. um die Abmessungen der Kamera klein zu halten - auch eine Videokamera ohne Display verwendet werden. Bei einer weiteren Variante kann auch ein externes Display verwendet werden, das drahtgebunden oder drahtlos (z.B. per Bluetooth) mit der Videokamera 2 verbunden ist.

Mit Hilfe der Videokamera 2 können Bilder, insbesondere Bewegtbilder aufgenommen werden.

Vorteilhaft ist die Videokamera 2 ein Camcorder, d.h., die aufgenommenen Bilddaten können in der Videokamera 2 analog oder - vorzugsweise - digital abgespeichert werden.

Vor der Speicherung findet vorteilhaft eine Kompression der Bilddaten statt, z.B. unter Verwendung eines JPEG- oder MPEG-, insbesondere z.B. eines H.264- / H.263- / H.262-Videodaten-Kompressionsverfahrens, oder eines beliebigen anderen Kompressionsverfahrens, insbesondere eines einem entsprechenden Standard genügenden Verfahrens.

Die Bilddaten werden dann z.B. in dem dem jeweiligen Kompressionsverfahren entsprechenden bzw. in dem im jeweiligen Standard definierten Format abgespeichert.

Zur Speicherung der (komprimierten) Bilddaten kann z.B. ein Magnetband, oder - besonders vorteilhaft - ein digitales Speichermedium 3 verwendet werden, z.B. eine (wiederbeschreibbare) DVD, eine integrierte Festplatte, ein wechselbarer Microdrive, oder - i.A. ganz ohne bewegliche Teile - eine Speicherkarte, insbesondere Flash-Speicherkarte, z.B. eine SD- bzw. "Secure Digital"- Karte, insbesondere z.B. eine MicroSD-Karte (oder eine beliebige andere Speicherkarte, z.B. eine XDCAM-, SxS-, DVCPro-, P2-Speicherkarte, etc.).

Die Videokamera 2 kann von einer Batterie, oder von einem Akku mit Strom versorgt werden.

Zur Aufzeichnung des Tones kann in die Videokamera 2 ein Mikrofon integriert sein; alternativ oder zusätzlich kann die Videokamera 2 einen oder mehrere Anschlüsse aufweisen, an die entsprechende Mikrofone angeschlossen werden können. Der Anschluß eines Mikrofons an die Videokamera 2 kann drahtgebunden erfolgen, oder - besonders vorteilhaft - drahtlos, was insbesondere z.B. den Vorteil haben kann, dass Windgeräusche vermieden bzw. vermindert werden können.

Die aufgenommenen Tondaten können in der Videokamera 2 analog oder - vorzugsweise - digital abgespeichert werden.

Vor der Speicherung der Tondaten kann ebenfalls vorteilhaft eine Kompression stattfinden.

Zur Speicherung der (komprimierten) Tondaten kann z.B. das o.g. Magnetband, oder - besonders vorteilhaft - das o.g. digitale Speichermedium 3, insbesondere die o.g. SD-Karte verwendet werden (oder ein separates analoges oder digitales Speichermedium).

Alternativ kann - z.B. um die Abmessungen der Kamera klein zu halten - auch eine Videokamera 2 ohne Mikrofon bzw. ohne Mikrofonanschlüsse verwendet werden.

Bei der Videokamera 2 kann es sich z.B. um eine Schulterkamera handeln, also um eine Kamera, die auf der Schulter geführt wird, oder - vorteilhaft - um eine Handkamera, die vor dem Körper gehalten wird.

Wird als Videokamera 2 eine Schulterkamera verwendet, kann die Kamera an der Unterseite eine Ausformung zur Auflage auf der Schulter und einen entsprechenden, auf der Schulter liegenden Schwerpunkt aufweisen; der Sucher kann dann seitlich an der Kamera angebracht sein.

Wird als Videokamera 2 eine Handkamera verwendet, kann sich der Sucher am hinteren Ende der Kamera befinden.

Besonders vorteilhaft wird als Videokamera 2 eine zur Aufnahme von Action-Szenen - beispielsweise beim Skifahren, Snowboarden, Fahrradfahren, insbesondere Mountain-Biken, Surfen, Wasserskifahren, Motorbootfahren, Segeln, Autofahren, Motorradfahren, Fliegen, Fallschirmspringen, Paragliden, Drachenfliegen etc., etc. - vorgesehene bzw. geeignete Kamera verwendet.

Die Videokamera 2 weist vorteilhaft relativ kleine Abmessungen auf, z.B. eine Länge kleiner als 18cm oder 14cm, insbesondere kleiner 8cm, und/oder eine Höhe und/oder Breite kleiner als 7cm oder 5cm, insbesondere kleiner 3cm.

Häufig werden derartige - kleine - Videokameras bei der Aufnahme nicht in der Hand gehalten, sondern z.B. an einem Helm befestigt ("Helmkamera"), oder z.B. an der Kleidung (z.B. an der Jacke, am Hemd, am Pullover, am T-Shirt, an der Mütze), am Körper (z.B. am Arm, insbesondere Oberarm, am Hals, an der Brust, am Kopf) etc.

Alternativ kann die Videokamera 2 auch an einem Sportgerät, z.B. Ski, Snowboard, Ski- bzw. Snowboardstecken, Fahrrad, insbesondere Mountain-Bike, Surfbrett, Wasserski, Motorboot, Segelboot, oder an einem Fahrzeug, z.B. Auto, Motorrad, oder z.B. einem Flugzeug, Fallschirm, Paraglider, Drachen, Ballon etc. befestigt sein.

Vorteilhaft ist die Videokamera 2 wasserfest.

Der Beginn und/oder das Ende der Aufnahme von Bild- und/oder Tondaten kann an der Videokamera 2 manuell getriggert werden, und/oder - zumindest teilweise - auch automatisch, z.B. beim Über- oder Unterschreiten einer bestimmten Geschwindigkeit, beim Eintritt oder Austritt in ein bestimmtes / aus einem bestimmten (z.B. mittels GPS bestimmten) Gebiet, beim Über- oder Unterschreiten einer bestimmten Höhe, beim Über- oder Unterschreiten einer bestimmten Herzfrequenz, etc., etc.

In die Videokamera 2 kann wie in Figur 1 gezeigt ein GPS-Empfänger 4 eines GPS-Systems integriert sein.

Der GPS-Empfänger 4 kann mit Satelliten eines GPS / Global Positioning Systems kommunizieren, die mit kodierten Radiosignalen ständig ihre aktuelle Position und/oder die genaue Uhrzeit ausstrahlen. Aus den Signallaufzeiten bzw. der Uhrzeit kann der GPS-Empfänger 4 dann z.B. seine Position und/oder Höhe (insbesondere die Höhe über dem Meeresspiegel) und/oder Geschwindigkeit und/oder Bewegungsrichtung - und damit die Position bzw. Höhe der Videokamera 2 bzw. deren Geschwindigkeit bzw. Bewegungsrichtung - berechnen.

Statt eines intern in die Videokamera 2 integrierten GPS-Empfängers 4 kann auch ein externer GPS-Empfänger verwendet werden, der über einen oder mehrere Videokamera-Anschlüsse an die Videokamera 2 angeschlossen werden kann.

Alternativ kann auch eine Videokamera 2 ohne GPS-Empfänger bzw. ohne GPS-Empfängeranschlüsse verwendet werden.

Alternativ oder zusätzlich kann in die Videokamera 2 eine Geschwindigkeits- bzw. Beschleunigungsmesseinrichtung integriert sein, und/oder kann eine Geschwindigkeits- bzw. Beschleunigungsmesseinrichtung an die Videokamera 2 angeschlossen werden.

Außerdem kann alternativ oder zusätzlich in die Videokamera 2 eine Zeitmesseinrichtung integriert sein, und/oder kann eine Zeitmesseinrichtung an die Videokamera 2 angeschlossen werden.

Des Weiteren kann alternativ oder zusätzlich in die Videokamera 2 eine Temperaturmesseinrichtung integriert sein, und/oder kann eine Temperaturmesseinrichtung an die Videokamera 2 angeschlossen werden.

Außerdem kann alternativ oder zusätzlich in die Videokamera 2 eine Herzfrequenzmesseinrichtung integriert sein, und/oder kann eine Herzfrequenzmesseinrichtung an die Videokamera 2 angeschlossen werden.

Des Weiteren kann alternativ oder zusätzlich in die Videokamera 2 eine barometrische Höhenmesseinrichtung integriert sein, und/oder kann eine barometrische Höhenmesseinrichtung an die Videokamera 2 angeschlossen werden, und/oder kann ein Kompass, insbesondere elektronischer Kompass in die Videokamera 2 integriert sein, und/oder an diese angeschlossen werden, etc.

Der Anschluss des o.g. (externen) GPS-Empfängers 4 und/oder der o.g. (externen) Geschwindigkeits- bzw. Beschleunigungsmesseinrichtung und/oder der o.g. (externen) Temperaturmesseinrichtung und/oder der o.g. (externen) Zeitmesseinrichtung und/oder der o.g. weiteren (externen) Messeinrichtungen an die Videokamera 2 kann drahtgebunden erfolgen, oder drahtlos, z.B. mittels Bluetooth, WiFi, etc.

Bei einer weiteren Variante kann die Videokamera 2 z.B. auch ein weiteres Interface, z.B. ein CAN-Bus-Interface aufweisen, mit dessen Hilfe die Videokamera 2 z.B. an ein Kraftfahrzeug, insbesondere Automobil, Motorrad, etc. angeschlossen werden kann, insbesondere an ein dort vorgesehenes Bus-System, z.B. CAN-Bus-System, und damit an dort vorgesehene weitere Messeinrichtungen, bzw. an von diesen Messeinrichtungen bereitgestellte Daten (Drehzahl, Temperatur des Kraftfahrzeugs, Außentemperatur, Motortemperatur, Geschwindigkeit des Kraftfahrzeugs, momentane Leistung, etc., etc.) abspeichernde Steuer- oder Speichervorrichtungen.

Die Videokamera 2 kann ein Display aufweisen, mit dem zusätzlich zu den von der Videokamera 2 aufgenommenen Bewegtbildern / Videos - bei und/oder nach deren Aufnahme - auch die von dem GPS-Empfänger 4 und/oder der Geschwindigkeits- bzw. Beschleunigungsmesseinrichtung und/oder der Temperaturmesseinrichtung und/oder der Zeitmesseinrichtung und/oder den o.g. weiteren Messeinrichtungen gelieferten Daten angezeigt werden können.

Alternativ kann - z.B. um die Abmessungen der Kamera klein zu halten - auch ein Display verwendet werden, mit dem zwar die von dem GPS-Empfänger 4 und/oder der Geschwindigkeits- bzw. Beschleunigungsmesseinrichtung und/oder der Temperaturmesseinrichtung und/oder der Zeitmesseinrichtung und/oder den o.g. weiteren Messeinrichtungen gelieferten Daten angezeigt werden, nicht aber die von der Videokamera 2 aufgenommenen Bewegtbilder / Videos.

Zur Speicherung der von dem GPS-Empfänger 4 und/oder der Geschwindigkeits- bzw. Beschleunigungsmesseinrichtung und/oder der Temperaturmesseinrichtung und/oder der Zeitmesseinrichtung und/oder den o.g. weiteren Messeinrichtungen gelieferten Daten kann z.B. das o.g. Magnetband, oder - besonders vorteilhaft - das o.g. digitale Speichermedium 3, insbesondere die o.g. SD-Karte verwendet werden.

Die von dem GPS-Empfänger 4 und/oder der Geschwindigkeits- bzw. Beschleunigungsmesseinrichtung und/oder der Temperaturmesseinrichtung und/oder der Zeitmesseinrichtung und/oder den o.g. weiteren Messeinrichtungen gelieferten Daten können hierbei in einem eigenen File auf dem Magnetband, oder dem digitalen Speichermedium 3 abgespeichert werden (und die o.g. (komprimierten) Bilddaten in einem hiervon separaten file).

Für die Abspeicherung der von dem GPS-Empfänger 4 und/oder der Geschwindigkeits- bzw. Beschleunigungsmesseinrichtung und/oder der Temperaturmesseinrichtung und/oder der Zeitmesseinrichtung und/oder den o.g. weiteren Messeinrichtungen gelieferten Daten kann dann ein anderes Daten-Format verwendet werden, als zur Abspeicherung der (komprimierten) Bilddaten.

Alternativ können die von dem GPS-Empfänger 4 und/oder der Geschwindigkeits- bzw. Beschleunigungsmesseinrichtung und/oder der Temperaturmesseinrichtung und/oder der Zeitmesseinrichtung und/oder den o.g. weiteren Messeinrichtungen gelieferten Daten oder Teile hiervon auch in die o.g. (komprimierten) Bilddaten integriert abgespeichert werden.

Hierzu kann in der Videokamera 2 ein dort z.B. per Software, und/oder Hardware (z.B. unter Verwendung eines entsprechenden Mikroprozessors) verwirklichter Multiplexer verwendet werden.

Die Bilddaten, und die o.g. von dem GPS-Empfänger 4 und/oder der Geschwindigkeits- bzw. Beschleunigungsmesseinrichtung und/oder der Temperaturmesseinrichtung und/oder der Zeitmesseinrichtung und/oder den o.g. weiteren Messeinrichtungen gelieferten Daten oder Teile hiervon können von dem Multiplexer z.B. in ein- und demselben file auf dem Magnetband, oder dem digitalen Speichermedium 3 abgespeichert werden.

Die von dem GPS-Empfänger 4 und/oder der Geschwindigkeits- bzw. Beschleunigungsmesseinrichtung und/oder der Temperaturmesseinrichtung und/oder der Zeitmesseinrichtung und/oder den o.g. weiteren Messeinrichtungen gelieferten Daten oder Teile hiervon können dann z.B. in einem Daten-Format abgespeichert werden, das dem für die Abspeicherung der Bilddaten verwendeten (Standard-)Daten-Format entspricht.

Die entsprechenden von dem GPS-Empfänger 4 und/oder der Geschwindigkeits- bzw. Beschleunigungsmesseinrichtung und/oder der Temperaturmesseinrichtung und/oder der Zeitmesseinrichtung und/oder den o.g. weiteren Messeinrichtungen gelieferten Daten erscheinen dann beim Betrachten der Bilddaten, z.B. am o.g. Display als in die Bilddaten eingeblendete Zusatz-Daten.

Alternativ oder zusätzlich können die entsprechenden von dem GPS-Empfänger 4 und/oder der Geschwindigkeits- bzw. Beschleunigungsmesseinrichtung und/oder der Temperaturmesseinrichtung und/oder der Zeitmesseinrichtung und/oder den o.g. weiteren Messeinrichtungen gelieferten Daten z.B. auch in die Tonspur oder Untertitel-Bildspur des o.g. Magnetbands aufmoduliert abgespeichert werden, oder in sonst zur Speicherung von zu den o.g. Bilddaten gehörigen Tondaten vorgesehenen digitalen Daten-Sätzen des digitalen Speichermediums 3 (ggf. wiederum nach entsprechender Modulation).

Alternativ oder zusätzlich können die von dem GPS-Empfänger 4 und/oder der Geschwindigkeits- bzw. Beschleunigungsmesseinrichtung und/oder der Temperaturmesseinrichtung und/oder der Zeitmesseinrichtung und/oder den o.g. weiteren Messeinrichtungen gelieferten Daten oder Teile hiervon statt in dem o.g. analogen oder digitalen Speichermedium 3 - auf dem die o.g. Bilddaten gespeichert sind - auch in einem separaten analogen oder digitalen Speichermedium abgespeichert werden.

Bei sämtlichen der o.g. Varianten können die o.g. Bilddaten, und/oder die von dem GPS-Empfänger 4 und/oder der Geschwindigkeits- bzw. Beschleunigungsmesseinrichtung und/oder der Temperaturmesseinrichtung und/oder den o.g. weiteren Messeinrichtungen gelieferten Daten jeweils mit "timestamp" abgespeichert werden, also mit - z.B. von der Zeitmesseinrichtung, oder vom GPS-Empfänger gelieferten - Daten, die anzeigen, zu welcher Uhrzeit, und/oder an welchem Tag, und/oder in welchem Monat, und/oder in welchem Jahr die Daten aufgenommen bzw. gemessen bzw. berechnet wurden.

Bei einer Variante der Erfindung kann zusätzlich zur Videokamera 2 - parallel - eine weitere Videokamera verwendet werden, die entsprechend ähnlich oder identisch aufgebaut sein kann, wie die Videokamera 2.

Die weitere Videokamera kann - zumindest teilweise parallel bzw. zeitgleich mit der Videokamera 2 - entsprechende weitere Bilddaten aufnehmen.

Beispielsweise können beide Videokameras in im wesentlichen paralleler Ausrichtung am Helm des Nutzers befestigt sein (z.B. die Videokamera 2 rechts, und die weitere Videokamera links am Helm), oder in im Wesentlichen paralleler Ausrichtung an der Kleidung oder am Körper oder am Sportgerät des Nutzers (z.B. am linken und rechten Oberarm, links und rechts am Fahrrad-Lenker, etc., etc.).

Die beiden Videokameras können dann z.B. im Wesentlichen identische bzw. sich stark überschneidende Blickwinkel abdecken (beispielsweise können beide Videokameras nach vorne hin filmen).

Aus den von der Videokamera 2 aufgenommenen Bilddaten können dann zusammen mit den von der weiteren Videokamera aufgenommenen weiteren Bilddaten entsprechende 3D-Bilddaten gewonnen werden.

Alternativ können die beiden Videokameras auch völlig unterschiedliche oder sich nur wenig überschneidende Blickwinkel abdecken (z.B. kann die Videokamera 2 nach vorne hin filmen, und die weitere Videokamera nach links oder rechts oder nach hinten hin, etc.).

Die weitere Videokamera kann autark sein; die von der weiteren Videokamera 2 aufgenommenen weiteren Bilddaten können dort in einem entsprechenden analogen oder digitalen Speichermedium abgespeichert werden, wie oben in Bezug auf die Videokamera 2 beschrieben.

Alternativ oder zusätzlich kann die weitere Videokamera auch drahtgebunden oder drahtlos mit der Videokamera 2 verbunden sein; die von der weiteren Videokamera aufgenommenen weiteren Bilddaten können dann an die Videokamera 2 übertragen, und - insbesondere zusätzlich zu den von der Videokamera 2 aufgenommenen Bilddaten - auf dem analogen oder digitalen Speichermedium der Videokamera 2 abgespeichert werden (z.B. in Form entsprechender 3D-Bilddaten).

Wie in Figur 1 veranschaulicht, können beim Datenkommunikationssystem 1 die auf dem o.g. analogen oder digitalen Speichermedium 3 und/oder dem o.g. separaten (zusätzlichen) analogen oder digitalen Speichermedium der Videokamera 2 und/oder der weiteren Videokamera gespeicherten Daten (oder Teile hiervon) an einen dem Nutzer der Videokamera 2 bzw. der weiteren Videokamera zugeordneten Rechner 5 übertragen werden, z.B. dessen PC (Personal Computer) / Notebook / Laptop / Netbook / Telefon bzw. Mobiltelefon mit Rechnerfunktion, etc.

Die Übertragung der Daten an den Rechner 5 des Nutzers kann drahtgebunden erfolgen, z.B. mittels einer entsprechenden USB-Schnittstelle, oder drahtlos.

Alternativ oder zusätzlich ist auch eine drahtlose Übertragung der Daten an den Rechner 5 möglich, z.B. mittels einer entsprechenden Bluetooth-Schnittstelle, oder einer WiFi-Schnittstelle, oder GSM/GPRS/UMTS/3G, oder auf beliebige andere Weise.

Die Übertragung der Daten an den Rechner 5 kann "per Hand" ausgelöst werden, oder auch automatisch getriggert werden, z.B., wenn die Videokamera 2 in das Sendegebiet eines öffentlichen WiFi-Hotspots gelangt, oder in das Sendegebiet eines privaten Funknetzes im Haus des Nutzers der Videokamera 2, oder auf beliebige andere Weise.

Alternativ oder zusätzlich können wie in Figur 1 mit Hilfe entsprechender gestrichelter Linien veranschaulicht beim Datenkommunikationssystem 1 die auf dem o.g. analogen oder digitalen Speichermedium 3 und/oder dem o.g. separaten (zusätzlichen) analogen oder digitalen Speichermedium der Videokamera 2 bzw. der weiteren Videokamera gespeicherten Daten (oder Teile hiervon) an einen - von einer Vielzahl von Nutzern einer Vielzahl von Videokameras gemeinsam genutzten - zentralen Server 6 übertragen werden. Der zentrale Server 6 kann z.B. von mehr als 100 Nutzern von mehr als 100 Videokameras gemeinsam genutzt werden, oder von einer noch größeren Anzahl von Nutzern einer noch größeren Anzahl von Videokameras (z.B. von mehr als 1000 oder mehr als 10000 Nutzern).

Die Übertragung der Daten an den zentralen Server 6 kann drahtlos und/oder drahtgebunden erfolgen, und mit oder ohne Zwischenschaltung des Rechners 5 (PCs / Notebooks / Laptops / Netbooks / Telefons bzw. Mobiltelefons mit Rechnerfunktion, etc.) des Nutzers, und/oder eines oder mehrerer weiterer Rechner, z.B. entsprechender Router (z.B. mittels einer entsprechenden USB-oder Bluetooth-Schnittstelle an den Rechner 5, und dann über das Internet an den zentralen Server 6, oder mittels WiFi über einen entsprechenden WiFi-Router, oder mittels GSM/GPRS/UMTS/3G direkt von der Videokamera 2 an den zentralen Server 6, oder auf beliebige andere Weise).

Die Übertragung der Daten an den zentralen Server 6 kann "per Hand" ausgelöst werden, oder auch automatisch getriggert werden, z.B., wenn die Videokamera 2 in das Sendegebiet eines öffentlichen WiFi-Hotspots gelangt, oder in das Sendegebiet eines privaten Funknetzes im Haus des Nutzers der Videokamera 2, oder auf beliebige andere Weise.

Alternativ oder zusätzlich können die o.g. Daten (oder Teile hiervon) - mit oder ohne vorheriger Speicherung auf dem o.g. analogen oder digitalen Speichermedium 3 und/oder dem o.g. separaten (zusätzlichen) analogen oder digitalen Speichermedium der Videokamera 2 (oder ganz ohne Speicherung auf den o.g. Speichermedien) - nicht erst zeitverzögert, z.B. mehr als 10 Minuten oder mehr als 1 Stunde etc. nach der Aufzeichnung / Messung der jeweiligen Daten, sondern direkt bei bzw. nach der Aufnahme der Daten - quasi "live" - an den o.g. Rechner 5, oder den o.g. zentralen Server 6 übertragen werden (insbesondere weniger als 1 Minute, z.B. weniger als 10 oder 2 Sekunden nach der Aufzeichnung / Messung der Daten) ("Live-Streaming"). Dies kann z.B. drahtlos erfolgen, z.B. mittels GSM/GPRS/UMTS/3G, und/oder mittels einer entsprechenden Bluetooth- oder WiFi-Schnittstelle, oder auf beliebige andere Weise.

Durch die o.g. drahtlose Verbindung der Videokamera 2 (GSM/GPRS/UMTS/3G, etc.) ist nicht nur ein entsprechendes Streaming, insbesondere das o.g. Live-Streaming von Daten an den Rechner 5 / den zentralen Server 6 möglich, sondern auch ein entsprechendes Herunterladen von Daten auf die Videokamera 2.

Vorteilhaft erfolgt das o.g. Live-Streaming der o.g. Daten (oder von Teilen hiervon) an den o.g. Rechner 5, oder den o.g. zentralen Server 6 mit einer niedrigeren Daten-Auflösung, als das Abspeichern der o.g. Daten (oder von Teilen hiervon) auf dem o.g. analogen oder digitalen Speichermedium 3 und/oder dem o.g. separaten (zusätzlichen) analogen oder digitalen Speichermedium der Videokamera 2.

Bei einer vorteilhaften Variante können die mittels Live-Streaming an den Rechner 5 bzw. den zentralen Server 6 übertragenen Daten direkt im Twitter-Account des Nutzers angezeigt werden, bzw. es kann im jeweiligen Twitter-Account - da dort i.d.R. nur Textdaten, z.B. maximal 140 Zeichen angezeigt werden können - lediglich der Hinweis darauf angezeigt werden, dass für den jeweiligen Nutzer neue Video-Bilddaten bereitgestellt werden (die von anderen Nutzern betrachtet werden können), und/oder ein Hinweis auf den Link / den Datenpfad, wo genau diese Video-Bilddaten abrufbar sind, etc.

Die o.g. im Twitter-Account angezeigten Text-Hinweis-Daten (z.B. "neues Video mit 145 km/h maximaler Geschwindigkeit beim Skifahren in Hintertux: www.youtube.com/GHFRF") können z.B. automatisch vor, bei oder nach Beginn des o.g. Live-Streamings an dem dem Nutzer zugeordneten Twitter-Account angezeigt werden, d.h., es kann automatisch ein entsprechendes Twitter-Update im jeweiligen Twitter-Account vorgenommen werden.

Die Text-Hinweis-Daten können entsprechende von dem GPS-Empfänger 4 und/oder der Geschwindigkeits- bzw. Beschleunigungsmesseinrichtung und/oder der Temperaturmesseinrichtung und/oder der Zeitmesseinrichtung und/oder den o.g. weiteren Messeinrichtungen gelieferte oder hieraus gewonnene Daten enthalten.

Die Übertragung der o.g. Daten (oder von Teilen hiervon) an den Rechner 5 bzw. den zentralen Server 6 kann auch unter Zwischenschaltung eines Mobiltelefons, insbesondere des Mobiltelefons des Nutzers der Videokamera 2 erfolgen.

Beispielsweise können die o.g. Daten drahtlos oder drahtgebunden, insbesondere mittels einer entsprechenden Bluetooth-Schnittstelle von der Videokamera 2 an das o.g. Mobiltelefon übertragen werden.

Das Mobiltelefon kann der Nutzer z.B. in der Hand halten, oder es kann sich in einer Tasche des Nutzers befinden, oder z.B. entsprechend ähnlich wie oben für die Videokamera beschrieben z.B. am Helm oder an der Kleidung oder am Körper oder am jeweiligen Sportgerät etc. befestigt sein.

Das Display des Mobiltelefons kann dann als die aufgenommen Bilddaten - quasi "live" - anzeigender Sucher für die Videokamera 2 fungieren; alternativ oder zusätzlich können am Display des Mobiltelefons auch - mit entsprechend frei wählbarer Zeitverzögerung - die o.g. auf dem o.g. analogen oder digitalen Speichermedium 3 und/oder dem o.g. separaten (zusätzlichen) analogen oder digitalen Speichermedium der Videokamera 2 gespeicherten Daten (oder Teile hiervon) angezeigt werden, ggf. nach vorheriger Abspeicherung dieser Daten im Mobiltelefon (s.u.).

Alternativ oder zusätzlich können die o.g. Funktionen auch vom o.g. (integrierten) Display der Videokamera 2, oder vom o.g. externen Videokamera-Display erfüllt werden:

Auch diese können z.B. als Sucher fungieren, bzw. die von der Videokamera 2 aufgenommenen Bilddaten können dort - quasi "live" - angezeigt werden.

Alternativ oder zusätzlich können am o.g. integrierten oder externen Videokamera-Display auch - mit entsprechend frei wählbarer Zeitverzögerung - die o.g. auf dem o.g. analogen oder digitalen Speichermedium 3 und/oder dem o.g. separaten (zusätzlichen) analogen oder digitalen Speichermedium der Videokamera 2 gespeicherten Daten (oder Teile hiervon) angezeigt werden.

Bei einer weiteren vorteilhaften Variante können das o.g. Mobiltelefon und/oder das o.g. (externe oder integrierte) Videokamera-Display auch die Funktion einer (Fern-)BedienungsEinrichtung erfüllen, bzw. können als Teil einer (Fern-)Bedienungs-Einrichtung eingesetzt werden. Beispielsweise können am Display des Mobiltelefons bzw. am o.g. (externen oder integrierten) Videokamera-Display Steuerelemente, z.B. "Start", "Stop", "Pause", etc. zum Starten, Stoppen, oder Unterbrechen der Aufnahme von Bilddaten durch die Videokamera 2 angezeigt werden.

Alternativ oder zusätzlich kann die Videokamera 2 auch über eine Spracherkennungs-Funktions-Einheit verfügen, oder kann eine solche als externes Bedienelement an die Videokamera 2 angeschlossen werden. Die (externe oder integrierte) Spracherkennungs-Funktions-Einheit kann eine entsprechende Fernbedienungs-Funktion erfüllen, so dass die Aufnahme von Bilddaten durch die Videokamera 2 mittels entsprechender akustischer Signale des Nutzers, etwa den von ihn ausgesprochenen Befehlen "Start", oder "Stop", oder "Pause" etc. entsprechend gestartet, gestoppt, oder unterbrochen werden kann.

Mit Hilfe der o.g. (z.B. zumindest teilweise durch das Mobiltelefon und/oder das o.g. externe oder integrierte Videokamera-Display und/oder die Spracherkennungs-Funktions-Einheit etc. bereitgestellten) (Fern-)Bedienungs-Einrichtung kann vorteilhaft auch eine Zoom-Funktion der Videokamera 2 gesteuert werden, etc.

Statt einer bewussten Steuerung "per Hand" bzw. per Spracheingabe durch den jeweiligen Nutzer der Videokamera 2 können eine oder mehrere der o.g. Funktionen (Start, Stop, Pause, Zoom, etc.) auch automatisiert gesteuert werden.

Beispielsweise kann der Zoom - automatisch - abhängig von der jeweiligen Geschwindigkeit geändert werden. Insbesondere kann der Zoom beim Überschreiten entsprechender Geschwindigkeits-Grenzwerte stufenweise verringert oder erhöht werden; alternativ kann der Zoom auch stufenlos angepasst werden (je höher die Geschwindigkeit, desto geringer oder höher der Zoom, und damit der jeweilige "Field of View").

Des Weiteren kann das (externe) Display und/oder das Mobiltelefon auch einen analogen/digitalen Ausgang zum Anschluss eines Monitors, Fernsehgeräts, etc. aufweisen.

Auf dem Rechner 5 (bzw. dem zentralen Server 6) ist eine spezielle Software geladen, mit deren Hilfe der Nutzer die an den Rechner 5 (oder alternativ den zentralen Server 6) übertragenen Daten (d.h. die o.g. (Video-)Bilddaten, und/oder die von dem GPS-Empfänger 4 und/oder der Geschwindigkeits- bzw. Beschleunigungsmesseinrichtung und/oder der Temperaturmesseinrichtung und/oder den o.g. weiteren Messeinrichtungen etc. gelieferten Daten) auf spezielle Weise bearbeiten kann.

Und zwar können wie im folgenden noch genauer erläutert wird auf dem Rechner 5 (und/oder dem zentralen Server 6) ein oder mehrere Sätze zusätzlicher Bilddaten ("Skin"-Bilddaten) - insbesondere entsprechende Bewegt-Bilddaten oder Fest-Bilddaten - vorab gespeichert sein.

Einer oder mehrere der auf dem Rechner 5 bzw. dem zentralen Server 6 gespeicherten "Skin-"Bilddaten-Sätze können in regelmäßigen oder unregelmäßigen Abständen einer Aktualisierung unterzogen werden (z.B. getriggert durch eine Änderung / Aktualisierung der o.g. auf dem zentralen Server 6 abgespeicherten speziellen Software, oder durch eine Änderung der Daten, auf den diese Software zugreift, oder auf beliebige andere Weise).

Dadurch können z.B. in einem "Skin"-Bilddaten-Satz enthaltene Banner, Logos oder andere Elemente etc. entsprechend geändert oder angepasst oder hinzugefügt oder entfernt werden. Mit anderen Worten kann eine dynamische Änderung der "Skin"-Bilddaten-Sätze vorgenommen werden.

Vorteilhaft können für eine Vielzahl verschiedener Nutzer bzw. Rechner (die in der Funktion dem Rechner 5 entsprechen) - zumindest teilweise - jeweils identische "Skin"-Bilddaten-Sätze verwendet werden.

Ein Teil der Elemente eines "Skin"-Bilddaten-Satzes kann aber auch nutzerindividuell erzeugt werden, und auf dem Rechner 5 des jeweiligen Nutzers (und/oder dem zentralen Server 6 unter Zuordnung zum jeweiligen Nutzer) abgespeichert werden - mit anderen Worten unterscheiden sich die o.g. "Skin"-Bilddaten-Sätze für verschiedene Nutzer dann hinsichtlich der nutzerindividuell erzeugten Elemente (und sind im Übrigen identisch).

Mit Hilfe der nutzerindividuell erzeugten Elemente kann z.B. der Rang oder Status eines Nutzers in seiner Internet-community angezeigt werden, seine Erfolge (z.B. die höchste je von ihm erreichte Geschwindigkeit, die höchste von ihm je erreichte Höhe, etc.), usw.

Der Nutzer kann von dem einen oder mehreren auf dem Rechner 5 bzw. dem Server 6 gespeicherten Sätzen zusätzlicher Bilddaten den für die jeweils zu bearbeitenden Daten, insbesondere (Video-)Bilddaten etc. jeweils gewünschten Satz zusätzlicher Bilddaten ("Skin"-Bilddaten) auswählen.

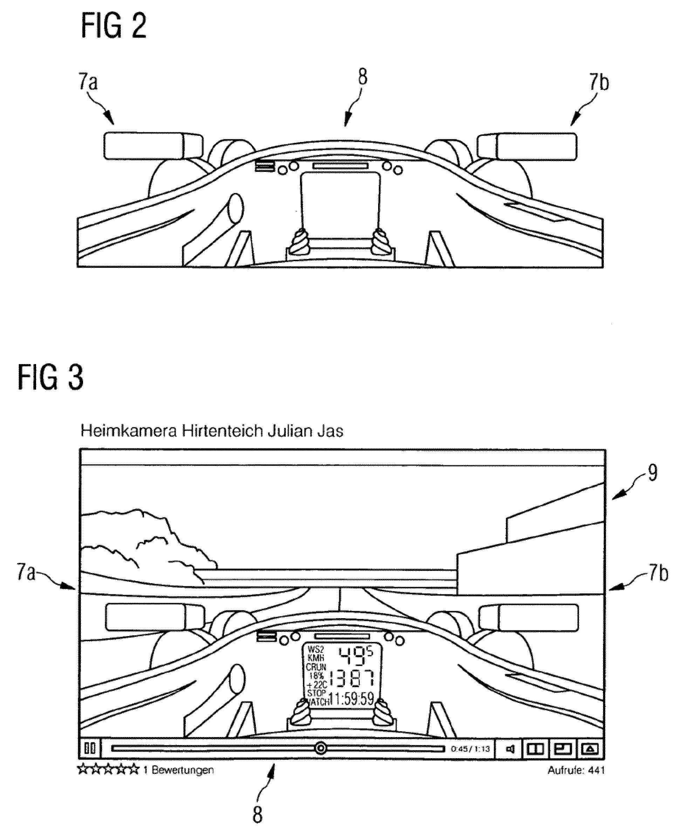

Ein erster (und ggf. weitere) der o.g. Sätze zusätzlicher Bilddaten ist z.B. zur Bearbeitung von Daten mit von der Videokamera 2 beim Autofahren aufgenommenen (Video-)Bilddaten vorgesehen (vgl. z.B. die in Figur 2 exemplarisch gezeigten zusätzlichen Bilddaten / "Skin"-Bilddaten).

Ein zweiter (und ggf. weitere) der o.g. Sätze zusätzlicher Bilddaten ist z.B. zur Bearbeitung von Daten mit von der Videokamera 2 beim Skifahren aufgenommenen (Video-)Bilddaten vorgesehen.

Ein dritter (und ggf. weitere) der o.g. Sätze zusätzlicher Bilddaten ist z.B. zur Bearbeitung von Daten mit von der Videokamera 2 beim Mountain-Biken aufgenommenen (Video-)Bilddaten vorgesehen.

Ein vierter (und ggf. weitere) der o.g. Sätze zusätzlicher Bilddaten ist z.B. zur Bearbeitung von Daten mit von der Videokamera 2 beim Motorradfahren aufgenommenen (Video-)Bilddaten vorgesehen, etc., etc.

Mit anderen Worten können zur Bearbeitung von bei einer Vielzahl verschiedener Arten von Aktivitäten / Sportarten - z.B. Skifahren, Snowboarden, Fahrradfahren, insbesondere Mountain-Biken, Surfen, Wasserskifahren, Motorbootfahren, Segeln, Autofahren, Motorradfahren, Fliegen, Fallschirmspringen, Paragliden, Drachenfliegen, etc. - aufgenommenen (Video-)Bilddaten für jede Art von Aktivität / Sportart jeweils ein oder mehrere Sätze unterschiedlicher zusätzlicher Bilddaten ("Skin"-Bilddaten) vorab auf dem Rechner 5 und/oder dem zentralen Server 6 gespeichert sein.

Wie sich aus der beispielhaften Darstellung von Figur 2 ergibt, betrifft der dortige Satz zusätzlicher Bilddaten / "Skin"-Bilddaten eine (Innen-)Ansicht eines Autos / Rennautos aus der Sicht eines nach vorne blickenden Fahrers (zu sehen sind etwa die Außenspiegeln 7a, 7b, sowie z.B. das Armaturenbrett 8 mit Mess- bzw. Anzeigeeinrichtungen, z.B. Tachometer - jedoch ohne etwaige von den Mess- bzw. Anzeigeeinrichtungen angezeigten Werten -, etc.).

Der in Figur 2 gezeigte Satz zusätzlicher Bilddaten / "Skin"-Bilddaten ist somit z.B. gut zur Bearbeitung von beim Autofahren aufgenommenen (Video-)Bilddaten geeignet.

Nachdem der Nutzer den zur Bearbeitung der jeweiligen Daten jeweils gewünschten Satz zusätzlicher Bilddaten ("Skin"-Bilddaten) ausgewählt hat, werden diese durch den Rechner 5 bzw. den zentralen Server 6 in die in den jeweils zu bearbeitenden Daten enthaltenen (Video-)Bilddaten integriert, und abgespeichert (z.B. auf dem Rechner 5, bzw. einer dieser zugeordneten Speichereinrichtung, bzw. auf dem zentralen Server 6, bzw. einer diesem zugeordneten Speichereinrichtung).

Hierzu kann in dem Rechner 5 bzw. dem zentralen Server 6 eine dort z.B. per Software verwirklichte Multiplex-Einrichtung verwendet werden.

Die entsprechenden zusätzlichen Bilddaten ("Skin"-Bilddaten) erscheinen dann beim Betrachten der von der Videokamera 2 aufgenommenen (Video-)Bilddaten als in die (Video)Bilddaten synchron eingeblendete zusätzliche Bilddaten.

Alternativ oder zusätzlich können durch den Rechner 5 bzw. den zentralen Server 6 neben oder statt den o.g. zusätzlichen Bilddaten ("Skin"-Bilddaten) die o.g. von dem GPS-Empfänger 4 und/oder der Geschwindigkeits- bzw. Beschleunigungsmesseinrichtung und/oder der Temperaturmesseinrichtung und/oder der Zeitmesseinrichtung und/oder den o.g. weiteren Messeinrichtungen gelieferten Daten oder Teile hiervon in die (Video-)Bilddaten integriert, und abgespeichert werden (z.B. auf dem Rechner 5, bzw. einer dieser zugeordneten Speichereinrichtung, bzw. auf dem zentralen Server 6, bzw. einer diesem zugeordneten Speichereinrichtung).

Hierzu kann (ebenfalls) die in dem Rechner 5 bzw. dem zentralen Server 6 z.B. per Software verwirklichte Multiplex-Einrichtung verwendet werden.

Die von dem GPS-Empfänger 4 und/oder der Geschwindigkeits- bzw. Beschleunigungsmesseinrichtung und/oder der Temperaturmesseinrichtung und/oder der Zeitmesseinrichtung und/oder den o.g. weiteren Messeinrichtungen gelieferten Daten können dann auf dem Rechner 5 bzw. dem zentralen Server 6 in einem Daten-Format abgespeichert werden, das dem für die Abspeicherung der (Video-)Bilddaten und/oder der zusätzlichen Bilddaten ("Skin"-Bilddaten) verwendeten (Standard-)Daten-Format entspricht.

Die entsprechenden von dem GPS-Empfänger 4 und/oder der Geschwindigkeits- bzw. Beschleunigungsmesseinrichtung und/oder der Temperaturmesseinrichtung und/oder der Zeitmesseinrichtung und/oder den o.g. weiteren Messeinrichtungen gelieferten Daten, und/oder die o.g. zusätzlichen Bilddaten ("Skin"-Bilddaten) erscheinen dann beim Betrachten der von der Videokamera 4 aufgenommenen (Video-)Bilddaten als in die (Video-)Bilddaten synchron eingeblendete Zusatz-Daten.

Wird z.B. der in Figur 2 gezeigte Satz zusätzlicher Bilddaten / "Skin"-Bilddaten zur Bearbeitung von beim Autofahren aufgenommenen (Video-)Bilddaten verwendet, werden in die von der Videokamera 2 beim Autofahren aufgenommenen (Video-)Bilddaten 9 (vgl. z.B. die in Figur 3 gezeigte Aufnahme einer Strasse, eines Straßenrands, des Himmels, etc.) Zusatz-Daten eingeblendet, die die (Innen-)Ansicht eines Autos / Rennautos aus der Sicht eines nach vorne blickenden Fahrers betreffen (vgl. z.B. die in Figur 3 gezeigten Außenspiegeln 7a, 7b, sowie z.B. das Armaturenbrett 8 mit Mess- bzw. Anzeigeeinrichtungen, z.B. Tachometer, etc.).

Wie sich ebenfalls aus Figur 3 ergibt, können hierbei vorteilhaft die von dem GPS-Empfänger 4 und/oder der Geschwindigkeits- bzw. Beschleunigungsmesseinrichtung und/oder der Temperaturmesseinrichtung und/oder der Zeitmesseinrichtung und/oder den o.g. weiteren Messeinrichtungen gelieferten Daten z.B. so dargestellt werden, als würden sie durch die in den o.g. zusätzlichen Bilddaten / "Skin"-Bilddaten enthaltenen Mess- bzw. Anzeigeeinrichtungen, z.B. Tachometer etc. angezeigt.

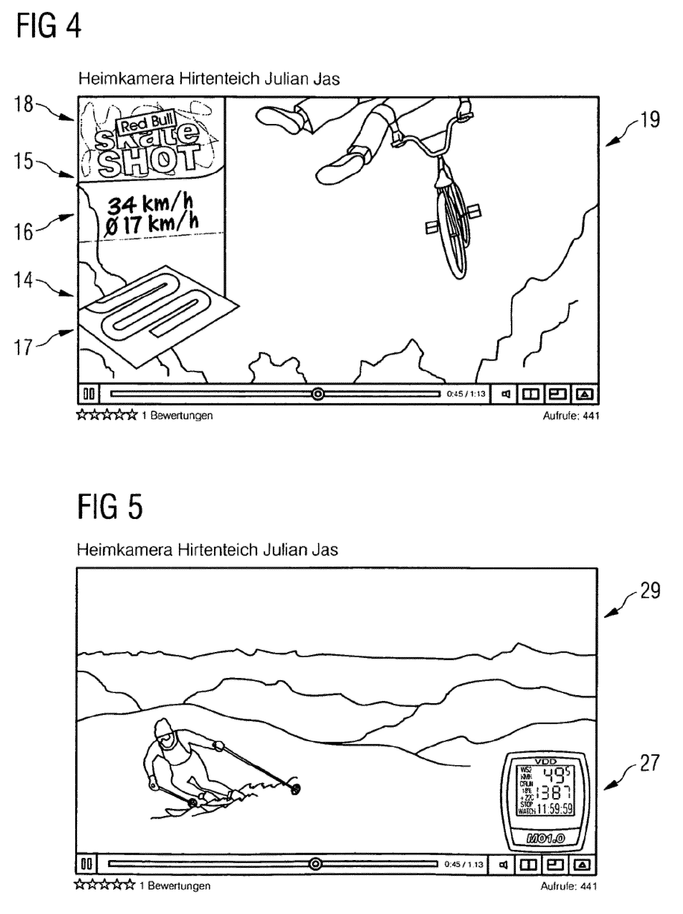

Als weiteres Beispiel ist in Figur 4 eine beispielhafte Darstellung von nach der Integration zusätzlicher Bilddaten / "Skin"-Bilddaten in beim Fahrradfahren aufgenommene Video-Bilddaten angezeigten Daten gezeigt.

Wie aus Figur 4 hervorgeht, werden in die von der Videokamera 2 beim Fahrradfahren aufgenommenen (Video-)Bilddaten 19 mit Hilfe eines entsprechenden Satzes "Skin"-Bilddaten Zusatz-Daten integriert, die z.B. die mit dem Fahrrad gefahrene Strecke 17 / den mit dem Fahrrad gefahrenen Parcours 17 darstellen, sowie eine Werbeeinblendung 18.

Wie sich ebenfalls aus Figur 4 ergibt, werden zusätzlich in die aufgenommenen (Video-)Bilddaten die vom o.g. GPS-Empfänger 4 und/oder der Geschwindigkeits- bzw. Beschleunigungsmesseinrichtung gelieferten Geschwindigkeitsdaten 15 integriert, und/oder von der Zeitmesseinrichtung gelieferte Zeitdaten (hier nicht dargestellt), und hieraus z.B. vom GPS-Empfänger 4 und/oder der Geschwindigkeits- bzw. Beschleunigungsmesseinrichtung und/oder der Videokamera 2 und/oder dem Rechner 5 und/oder dem Server 6, etc. berechnete Daten bzgl. der Durchschnittsgeschwindigkeit 16, und/oder bzgl. der Rundenzeit, etc., etc.

Die Rundenzeit kann z.B. dadurch berechnet werden, dass nachträglich oder bereits bei der Aufnahme der Bilddaten mit der Videokamera 2 oder auf beliebige andere Weise z.B. eine entsprechende Start- und/oder Ziel-Linie definiert wird, z.B. mittels entsprechender GPS-Webpunkte, etc.

Des Weiteren werden (z.B. aus den vom o.g. GPS-Empfänger 4 gelieferten Daten berechnete) Positions-Daten 14 in die aufgenommenen (Video-)Bilddaten integriert, die anzeigen, wo genau sich das Fahrrad (bei einer bestimmten Fahrt) auf der gefahrenen Strecke 17 / im Parcours 17 gerade befindet.

Alternativ oder zusätzlich können (z.B. aus vom o.g. GPS-Empfänger 4 gelieferten weiteren Daten berechnete) weitere Positions-Daten in die aufgenommenen (Video-)Bilddaten integriert werden, die anzeigen, wo genau - bei einer anderen, späteren oder früheren Fahrt - sich das Fahrrad auf der gefahrenen Strecke 17 / im Parcours 17 befindet.

Damit kann ein Nutzer zwei verschiedene von ihm vorgenommene Fahrten durch den gleichen Parcours 17 miteinander vergleichen (wobei fingiert wird, dass die Fahrten zu genau dem gleichen Zeitpunkt begonnen wurden).

Alternativ oder zusätzlich können (z.B. aus von einem zusätzlichen GPS-Empfänger einer zusätzlichen Videokamera eines zusätzlichen Nutzers gelieferten zusätzlichen Daten berechnete) zusätzliche Positions-Daten in die aufgenommenen (Video-)Bilddaten integriert werden, die anzeigen, wo genau - bei einer anderen, gleichzeitigen, späteren oder früheren Fahrt des zusätzlichen Nutzers - sich das Fahrrad auf der gefahrenen Strecke 17 / im Parcours 17 befindet.

Damit können der Nutzer und der zusätzliche Nutzer ihre vorgenommene Fahrten durch den gleichen Parcours 17 miteinander vergleichen (wobei fingiert wird, dass die Fahrten zu genau dem gleichen Zeitpunkt begonnen wurden).

Die Positions-Daten 14 des Nutzers und die zusätzlichen Positions-Daten des zusätzlichen Nutzers können z.B. mittels in unterschiedlicher Farbe angezeigter Symbole gekennzeichnet werden.

Alternativ oder zusätzlich können Teilabschnitte der gefahrenen Strecke 17 / des gefahrenen Parcours 17 in jeweils unterschiedlichen Farben dargestellt werden, wobei die Farbgebung eines Teilabschnitts von der im jeweiligen Teilabschnitt vorliegenden Geschwindigkeit, insbesondere Durchschnittsgeschwindigkeit abhängen kann.

Alternativ oder zusätzlich können in die aufgenommenen (Video-)Bilddaten vom o.g. GPS-Empfänger 4 und/oder der Geschwindigkeits- bzw. Beschleunigungsmesseinrichtung gelieferte Daten integriert werden, die für jeden der o.g. Teilabschnitte die jeweilige Geschwindigkeit / Durchschnittsgeschwindigkeit angegeben.

Als weiteres Beispiel ist in Figur 5 eine beispielhafte Darstellung von nach der Integration zusätzlicher Bilddaten / "Skin"-Bilddaten in beim Skifahren aufgenommene Video-Bilddaten angezeigten Daten gezeigt.

Wie aus Figur 5 hervorgeht, werden in die von der Videokamera 2 beim Skifahren aufgenommenen (Video-)Bilddaten 29 mit Hilfe eines entsprechenden Satzes "Skin"-Bilddaten Zusatz-Daten integriert, die z.B. ein Messgerät 27 darstellen.

Wie sich ebenfalls aus Figur 5 ergibt, werden zusätzlich in die aufgenommenen (Video-)Bilddaten die vom o.g. GPS-Empfänger 4 und/oder der Geschwindigkeits- bzw. Beschleunigungsmesseinrichtung und/oder der Temperaturmesseinrichtung und/oder der Zeitmesseinrichtung und/oder den o.g. weiteren Messeinrichtungen, z.B. der Herzfrequenzmesseinrichtung und/oder der barometrischen Höhenmesseinrichtung gelieferten und/oder hieraus ermittelte Daten integriert, und zwar so, dass sie beim Betrachten der erzeugten Bilddaten vom in den "Skin"-Bilddaten enthaltenen Messgerät 27 angezeigt werden.

Bei einer vorteilhaften Variante des Datenkommunikationssystems 1 kann der Nutzer auswählen, welche Daten genau bei einem bestimmten Satz "Skin"-Bilddaten mit angezeigt, bzw. in die entsprechenden (Video-)Bilddaten integriert werden sollen (d.h. welcher der von dem GPS-Empfänger 4 und/oder der Geschwindigkeits- bzw. Beschleunigungsmesseinrichtung und/oder der Temperaturmesseinrichtung und/oder der Zeitmesseinrichtung und/oder den o.g. weiteren Messeinrichtungen, z.B. der Herzfrequenzmesseinrichtung und/oder der barometrischen Höhenmesseinrichtung gelieferten Daten - z.B. entsprechende Geschwindigkeits- und Zeitmessdaten, nicht aber entsprechende Temperaturdaten, etc., etc.).

Bei einer vorteilhaften Variante des Datenkommunikationssystems 1 kann der Nutzer das genaue Aussehen eines Satzes von "Skin"-Bilddaten selbst mit gestalten bzw. anpassen.

Beispielsweise könnte der Nutzer bei den in Figur 2 gezeigten "Skin"-Bilddaten selbst festlegen, ob und welche Außenspiegel 7a, 7b angezeigt werden sollen (bzw. welche Form und/oder Größe diese konkret haben sollen), und/oder deren Lage, und/oder die Lage bzw. das Aussehen des Armaturenbretts 8 (bzw. welche Form und/oder Größe dieses konkret haben soll), und/oder die Lage und/oder die Form und/oder Größe weiterer anzuzeigender (oder wahlweise nicht anzuzeigender), in den jeweiligen "Skin"-Bilddaten enthaltener Elemente - z.B. einer Land-Karte, z.B. einer Google®-Map -, etc., etc.

Alternativ oder zusätzlich kann der Nutzer z.B. die jeweilige(n) Farbe/Farben und/oder die konkret verwendete Farbkombination eines Satzes "Skin-"Bilddaten auswählen, bzw. selbst gestalten bzw. anpassen, und/oder den Maßstab der o.g. Land-Karte, insbesondere Google®-Map, etc., etc.

Alternativ oder zusätzlich kann der Maßstab der o.g. Land-Karte auch automatisch angepasst werden, z.B. abhängig von der jeweiligen Geschwindigkeit, oder auf beliebige andere Weise.

Alternativ oder zusätzlich kann der Nutzer wahlweise ein beliebig von ihm editierbares Textfeld mit in die "Skin-"Bilddaten integrieren, und dieses z.B. als ein - seinen Namen angebendes - Namensschild verwenden, und/oder als - einen von ihm gewählten Videotitel angebendes - Titelschild, etc., etc.

Bei einer weiteren Variante kann zur Erzeugung der o.g. (bearbeiteten) (Video-)Daten statt des Rechners 5 bzw. Servers 6 auch eine beliebige andere Einrichtung verwendet werden, z.B. das o.g. Mobiltelefon des Nutzers, das wie oben erläutert drahtgebunden oder drahtlos, z.B. mittels Bluetooth an die Videokamera 2 angeschlossen werden kann, oder z.B. die Videokamera 2 selbst, etc.

Wird zur Bearbeitung der durch die Videokamera 2 aufgenommenen Bilddaten die Videokamera 2 selbst, oder z.B. das o.g. Mobiltelefon verwendet, werden vorher die entsprechenden o.g. zur Bearbeitung vorgesehenen weiteren Bilddaten ("Skin"-Bilddaten) an die Videokamera 2 bzw. das Mobiltelefon übertragen (z.B. vom Server 6 aus, oder vom Rechner 5).

Die Bearbeitung erfolgt entsprechend ähnlich oder identisch wie in Bezug auf eine Bearbeitung durch den Rechner / Server 5, 6 oben bereits kurz erwähnt und weiter unten noch genauer erläutert (z.B. unter Verwendung der o.g. (Fern-)Bedienungs-Einrichtung der Videokamera).

Die jeweils erzeugten, bearbeiteten, im Rechner 5 bzw. Server 6 bzw. Mobiltelefon bzw. der Videokamera 2 etc. abgespeicherten (Video-)Daten (in die wie erläutert entsprechende von dem GPS-Empfänger 4 und/oder der Geschwindigkeits- bzw. Beschleunigungsmesseinrichtung und/oder der Temperaturmesseinrichtung und/oder der Zeitmesseinrichtung und/oder den o.g. weiteren Messeinrichtungen gelieferte oder hieraus gewonnene Daten, und/oder die o.g. zusätzlichen Bilddaten ("Skin"-Bilddaten) integriert sind), können vom jeweiligen Nutzer z.B. zur Betrachtung durch einen oder mehrere weitere Nutzer des zentralen Servers 6 freigeschaltet werden.

Alternativ oder zusätzlich kann der jeweilige Nutzer die erzeugten, im Rechner 5 bzw. Server 6 bzw. Mobiltelefon etc. abgespeicherten Daten z.B. per e-mail versenden (z.B. direkt vom Server 6 oder von seinem Rechner 5 aus, oder z.B. von seinem Rechner 5 aus unter Zwischenschaltung des Servers 6, oder z.B. vom Server 6 aus unter Zwischenschaltung seines Rechners 5, oder auf beliebige andere Weise).

Alternativ oder zusätzlich kann der jeweilige Nutzer die erzeugten, im Rechner 5 bzw. Server 6 bzw. Mobiltelefon etc. abgespeicherten Daten im Internet einstellen, z.B. bei einer Internet-Plattforme wie Youtube® (http://www.youtube.com), etc.

Die erzeugten, auf die oben erläuterte Weise bearbeiteten Bilddaten können dann wie in Figur 1 veranschaulicht vom Rechner 5 bzw. Server 6 bzw. Mobiltelefon etc. aus über das Internet auf einen entsprechenden Rechner / Server 66 der jeweiligen Internet-Plattform übertragen, und dort abgespeichert werden.

Alternativ oder zusätzlich kann der jeweilige Nutzer die erzeugten, im Rechner 5 bzw. Server 6 bzw. Mobiltelefon bzw. der Videokamera 2 etc. abgespeicherten, bearbeiteten (und/oder die o.g. unbearbeiteten und/oder nur teilweise bearbeitete) (Video-Bild-) Daten auch an seinem Twitter-Account anzeigen lassen, bzw. es kann im jeweiligen Twitter-Account - da dort i.d.R. nur Textdaten, z.B. maximal 140 Zeichen angezeigt werden können - lediglich der Hinweis darauf angezeigt werden, dass für den jeweiligen Nutzer neue Video-Bilddaten bereitgestellt wurden (die von anderen Nutzern betrachtet werden können), und/oder ein Hinweis auf den Link / den Datenpfad, wo genau diese Video-Bilddaten abrufbar sind, etc.

Statt einen direkten Hinweis auf den Link/Datenpfad, wo die Video-Bilddaten abgespeichert sind können die im Twitter-Account angezeigten Text-Hinweis-Daten z.B. auch einen Link zu einer persönlichen Internet-Seite des Nutzers enthalten, auf der sowohl die Video-Bilddaten als auch weitere Daten, z.B. Google®-Maps zu sehen sind.

Die o.g. im Twitter-Account angezeigten Text-Hinweis-Daten (z.B. "neues Video mit 145 km/h maximaler Geschwindigkeit beim Skifahren in Hintertux: www.youtube.com/GHFRF") können z.B. automatisch nach einem (manuellen oder automatischen) upload neuer Video-Bilddaten des jeweiligen Nutzers z.B. auf dem Server 6, dem Server 66, etc. an dem dem Nutzer zugeordneten Twitter-Account angezeigt werden, d.h., es kann automatisch ein entsprechendes Twitter-Update im jeweiligen Twitter-Account vorgenommen werden.

Die Text-Hinweis-Daten können entsprechende von dem GPS-Empfänger 4 und/oder der Geschwindigkeits- bzw. Beschleunigungsmesseinrichtung und/oder der Temperaturmesseinrichtung und/oder der Zeitmesseinrichtung und/oder den o.g. weiteren Messeinrichtungen gelieferte oder hieraus gewonnene Daten enthalten.

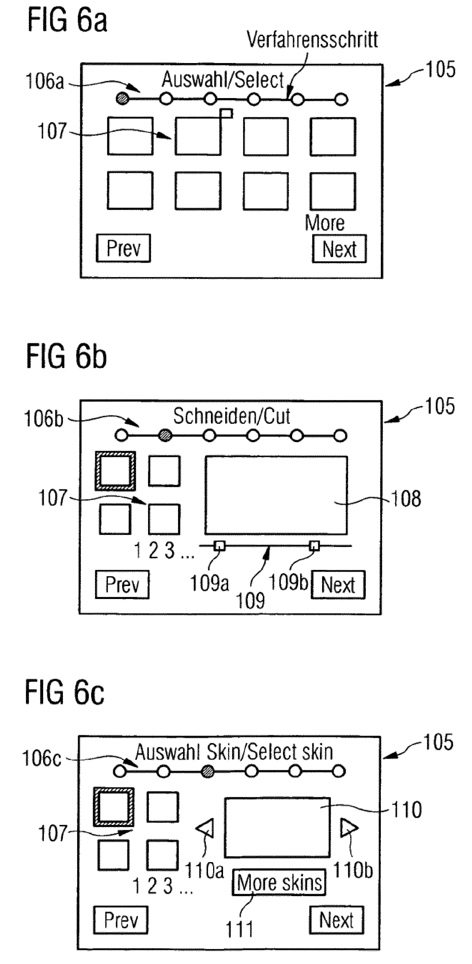

In den Figuren 6a - 6f ist eine beispielhafte Darstellung von an einer Anzeigevorrichtung des in Figur 1 gezeigten Rechners 5 eines Nutzers jeweils angezeigten Daten gezeigt, zur Erläuterung von bei der Bearbeitung aufgenommener Video-Bilddaten beispielhaft durchgeführten Verfahrens-Schritten.

Nach dem (wie oben erläutert drahtlosen oder drahtgebundenen) Anschluss der Videokamera 2 des Nutzers an dessen Rechner 5 (PC / Notebook / Laptop / Netbook / Telefon bzw. Mobiltelefon mit Rechnerfunktion, etc.) kann gesteuert durch die o.g. auf den Rechner 5 geladene Software an dessen Anzeigevorrichtung 105, z.B. einem entsprechenden Monitor / Bildschirm / Display angezeigt werden, welcher von mehreren hintereinander ausgeführten Verfahrens-Schritten bei der Bearbeitung aufgenommener Video-Bilddaten gerade durchgeführt wird.

Beispielsweise wird wie in Figur 6a dargestellt durch die Anzeigevorrichtung 105 angezeigt, dass momentan ein Schritt "Select" bzw. "Auswahl" 106a durchgeführt wird, bei dem der Nutzer unter mehreren auf dem o.g. Speichermedium 3 bzw. dem o.g. weiteren / separaten Speichermedium etc. der Videokamera 2 (und/oder dem Rechner 5, bzw. dem Server 6) gespeicherten, zu bearbeitenden Sätzen an Video-Bilddaten denjenigen auswählen kann, der als nächstes bearbeitet werden sollen.

Hierzu wird an der Anzeigevorrichtung 105 eine Video-Bilddaten-Liste 107 angezeigt, die (sämtliche) auf dem jeweiligen Speichermedium etc. gespeicherte Video-Bilddaten-Sätze bzw. die entsprechenden file-Namen angeben kann, bzw. die einzelne Vorschau-Bilder zu jedem der Video-Bilddaten-Sätze anzeigen kann.

Zur Erleichterung der Auswahl eines jeweiligen Video-Bilddaten-Satzes kann durch den Nutzer das entsprechende Video oder Teile hiervon abgespielt werden, d.h. die entsprechenden Bewegtbilder können in einem entsprechenden Fenster an der Anzeigevorrichtung 105 dargestellt werden.

Hat der Nutzer einen entsprechenden Satz Video-Bilddaten zur Bearbeitung ausgewählt (z.B. durch Anklicken eines jeweiligen Icons der o.g. Video-Bilddaten-Liste 107), kann wie in Figur 6b dargestellt, und durch die Anzeigevorrichtung 105 angezeigt ein Schritt "Cut" bzw. "Schneiden" 106b durchgeführt werden.

Hierbei kann wie in Figur 6b dargestellt der ausgewählte Video-Bilddaten-Satz in der Video-Bilddaten-Liste 107 gehighlighted werden, und in Form eines entsprechenden Videos an einem von der Anzeigevorrichtung dargestellten Fenster 108 abgespielt werden.

Der Nutzer kann dann den ausgewählten Video-Bilddaten-Satz entsprechend schneiden, insbesondere mittels entsprechender durch den Nutzer verschiebbarer Buttons 109, mit denen der Start-Punkt 109a und der End-Punkt 109b des Video-Bilddaten-Satzes festgelegt werden kann (zeitlich vor dem gewählten Start-Punkt 109a und zeitlich nach dem gewählten End-Punkt 109b liegende Bilddaten werden dann aus dem Video-Bilddaten-Satz herausgeschnitten).

Nach dem Schneiden des ausgewählten Video-Bilddaten-Satzes kann wie in Figur 6c dargestellt, und durch die Anzeigevorrichtung 105 angezeigt ein Schritt "Select Skin" bzw. "Auswahl Skin" 106c durchgeführt werden.

Hierbei kann der Nutzer unter mehreren auf dem Rechner 5 gespeicherten Skin-Bilddaten-Sätzen denjenigen Skin-Bilddaten-Satz auswählen, der zur Bearbeitung des ausgewählten Video-Bilddaten-Satzes verwendet werden soll.

Zur Erleichterung der Auswahl eines jeweiligen Skin-Bilddaten-Satzes durch den Nutzer können die einem jeweiligen Skin-Bilddaten-Satz entsprechenden Bilder jeweils in einem entsprechenden Fenster 110 an der Anzeigevorrichtung 105 dargestellt werden.

Ein dem jeweils momentan dargestellten Skin-Bilddaten-Satz vorangehender Skin-Bilddaten-Satz wird dann am Fenster 110 dargestellt, wenn der Nutzer einen entsprechenden Button 110a betätigt.

Entsprechend wird ein dem jeweils momentan dargestellten Skin-Bilddaten-Satz nachfolgender Skin-Bilddaten-Satz dann am Fenster 110 dargestellt, wenn der Nutzer einen entsprechenden weiteren Button 110b betätigt.

Will der Nutzer weitere - insbesondere momentan noch nicht auf seinem Rechner 5, jedoch dem o.g. Server 6 gespeicherte - Skin-Bilddaten-Sätze betrachten / herunterladen / auswählen, kann er einen zusätzlichen Button 111 ("more skins" bzw. "weitere Skins") betätigen.

Ein Teil der auf dem o.g. Server 6 gespeicherten Skin-Bilddaten-Sätze können für bestimmte Nutzer gesperrt, bzw. nur für bestimmte Nutzer zum Betrachten / Herunterladen / Auswählen freigegeben sein.

Die Nutzer, für die diese Skin-Bilddaten-Sätze freigegeben sind, können z.B. "per Hand" durch einen oder mehrere Administratoren des Servers 6 - z.B. entsprechende Sponsoren - ausgewählt werden, oder z.B. automatisiert nach bestimmten Kriterien (Bewertung eines Nutzers durch andere Nutzer, bzw. Status des Nutzers, durch den Nutzer zurückgelegte Kilometer / Höhenmeter, vom Nutzer erreichte Höchstgeschwindigkeit, oder durch den vom Nutzer durch die o.g. Daten erbrachten Nachweis zu einer bestimmten Zeit an einem bestimmten Ort gewesen zu sein (an dem z.B. eine Veranstaltung der o.g. Sponsoren stattgefunden hat), etc., etc.).

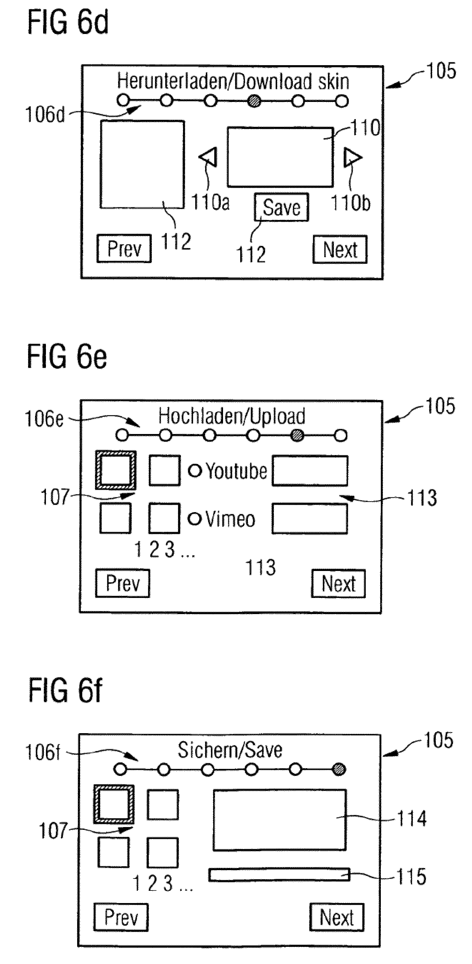

Wie in Figur 6d dargestellt, und durch die Anzeigevorrichtung 105 angezeigt kann nach der Auswahl eines Skins (vgl. den in Figur 6c gezeigten Schritt) ein Schritt "Download Skin" bzw. "Herunterladen Skin" 106d durchgeführt werden.

Hierbei kann zunächst ausgewählt werden, welcher Kategorie ein zu betrachtender / herunterzuladender Skin-Bilddaten-Satz zugehörig sein soll, z.B. welcher der o.g. Arten von Aktivitäten / Sportarten (z.B. Skifahren, Snowboarden, Fahrradfahren, insbesondere Mountain-Biken, Surfen, Wasserskifahren, Motorbootfahren, Segeln, Autofahren, Motorradfahren, Fliegen, Fallschirmspringen, Paragliden, Drachenfliegen, etc.).

Hierzu wird an der Anzeigevorrichtung 105 eine Skin-Kategorie-Liste 112 angezeigt, die (sämtliche) mögliche der o.g. Kategorien / Sportarten angibt.

Hat der Nutzer eine entsprechende Skin-Kategorie ausgewählt (z.B. durch Anklicken eines jeweiligen Icons der o.g. Skin-Kategorie-Liste 112), können wie in Figur 6d dargestellt einem der jeweiligen Kategorie zugehörigen Skin-Bilddaten-Satz entsprechende Bilder in einem entsprechenden Fenster 110 an der Anzeigevorrichtung 105 dargestellt werden.

Der entsprechende Skin-Bilddaten-Satz kann dabei - da nicht auf dem Rechner 5 des Nutzers gespeichert - über das Internet von dem Server 6 an den Rechner 5 übertragen werden.

Ein dem jeweils momentan dargestellten Skin-Bilddaten-Satz vorangehender, auf dem Server 6 gespeicherter Skin-Bilddaten-Satz der jeweils ausgewählten Kategorie wird dann am Fenster 110 dargestellt, wenn der Nutzer einen entsprechenden Button 110a betätigt.

Entsprechend wird ein dem jeweils momentan dargestellten Skin-Bilddaten-Satz nachfolgender, auf dem Server 6 gespeicherter Skin-Bilddaten-Satz dann am Fenster 110 dargestellt, wenn der Nutzer einen entsprechenden weiteren Button 110b betätigt.

Wird ein "Save" - bzw. "Speicher" - Button 112 betätigt, wird der jeweilige, am Fenster 110 dargestellte Skin-Bilddaten-Satz vom Server 6 heruntergeladen, und dauerhaft im Rechner 5 lokal abgespeichert.

Wird später erneut der oben erläuterte, in Figur 6c dargestellte Schritt "Select Skin" bzw. "Auswahl Skin" 106c durchgeführt, ist der dann lokal abgespeicherte, vom Server 6 heruntergeladene Skin-Bilddaten-Satz lokal auf dem Rechner 5 verfügbar, d.h., kann vom Nutzer unmittelbar beim in Figur 6c dargestellten Schritt "Select Skin" bzw. "Auswahl Skin" 106c zur Bearbeitung eines jeweiligen Video-Bilddaten-Satzes ausgewählt werden.

Soll ein entsprechender Video-Bilddaten-Satz (vor oder nach einer entsprechenden Bearbeitung, insbesondere vor oder nach der Integration entsprechender Skin-Bilddaten) im Internet eingestellt werden, z.B. bei Youtube® (http://www.youtube.com) oder Vimeo® (http://www.vimeo.com), etc., kann der in Figur 6e dargestellte Schritt "Upload" bzw. "Hochladen" 106e durchgeführt werden.

Der jeweils hochzuladende Video-Bilddaten-Satz kann durch Anklicken eines jeweiligen Icons der o.g. Video-Bilddaten-Liste 107 ausgewählt werden; die entsprechenden Login-Daten für Youtube, Vimeo, etc. können in einem Fenster 113 eingegeben, und auf dem o.g. Server 6 unter Zuordnung zum jeweiligen Nutzer abgespeichert werden (so daß sich bei der nächstmaligen Nutzung des Servers 6 durch den Nutzer ein separates Eingeben der Youtube- bzw. Vimeo-Login-Daten im o.g. Fenster 113 erübrigen kann; stattdessen kann zum Einloggen bei Youtube / Vimeo etc. dann automatisch auf die auf dem Server 6 hinterlegten Login-Daten zurückgegriffen werden).

Nach Durchführung eines Logins bei Youtube / Vimeo etc. unter Steuerung durch den Server 6 und/oder den Rechner 5 können dann die o.g. ausgewählten Video-Bilddaten-Sätze über das Internet an den in Figur 1 gezeigten Rechner / Server 66 der jeweiligen Internet-Plattform übertragen, und dort abgespeichert werden.

Sollen auf die oben erläuterte Weise bearbeitete, mit Skin-Bilddaten unterlegte bzw. zu unterlegende Video-Bilddaten komprimiert bzw. in ein entsprechendes Standard-Format gebracht bzw. abgespeichert werden, kann der in Figur 6f dargestellte Schritt "Save" bzw. "Sichern" 106f durchgeführt werden.

Der jeweils abzuspeichernde Video-Bilddaten-Satz kann durch Anklicken eines jeweiligen Icons der o.g. Video-Bilddaten-Liste 107 ausgewählt werden.

Wie in Figur 6f dargestellt kann in einem Fenster 114 ein preview des zu komprimierenden / zu formatierenden / abzuspeichernden, mit Skin-Bilddaten unterlegten bzw. zu unterlegenden Video-Bilddaten-Satzes angezeigt werden, und in einer Fenster-Leiste 115 der Fortschritt des Vorgangs des Komprimierens / Formatierens / Abspeicherns, etc.

Bei einer weiteren Variante kann ein jeweiliger Nutzer beim Betrachten eines bearbeiteten Video-Bilddaten-Satzes zwischen verschiedenen jeweils zu verwendenden Skin-Bilddaten (mit denen die unbearbeiteten Video-Bilddaten unterlegt sind) hin- und herschalten, z.B. durch Anklicken eines entsprechenden Umschalte-Buttons.

Bei einer zusätzlichen Variante kann ein Nutzer zwei verschiedene jeweils mit Skin-Bilddaten unterlegte bzw. zu unterlegenden Video-Bilddaten-Sätze übereinanderlegen bzw. ineinanderkopieren (oder entsprechende Teile hiervon), bzw. zwei Video-Bilddaten-Sätze übereinanderlegen bzw. ineinanderkopieren, und dann mit entsprechenden Skin-Bilddaten unterlegen. Vorteilhaft erfolgt dies mit entsprechend ähnlichen Video-Bilddaten-Sätzen, z.B. bzgl. der gleichen Skiabfahrt, z.B. der Streif in Kitzbühel, die zu unterschiedlichen Zeiten aufgenommen wurden, und ggf. von unterschiedlichen Nutzern.

## Patentansprüche

1. Videodaten-Kommunikationsverfahren mit:
Aufnehmen von Video-Bilddaten (9;19;29) mit einer Videokamera (2) während der Ausführung einer Aktivität oder eines Sports durch einen Nutzer, wobei die Videokamera an einem Helm oder einem Sportgerät, das mit dem Nutzer während der Aufnahme verknüpft ist, befestigbar ist;
Verwenden von zumindest einer Messeinrichtung (4), um Daten (14;15) während der Ausführung der Aktivität oder des Sports zu gewinnen, die mit zumindest dem Nutzer oder der Videokamera verknüpft sind Speichern der Video-Bilddaten (9;19;29) und der Daten (14; 15), die von der zumindest einen Messeinrichtung (4) gewonnen wurden, oder von hieraus erzeugten Daten (16;17) in einem Speichermedium (3) der Videokamera (2);
drahtloses Übertragen von zumindest einem Teil der im Speichermedium (3) der Videokamera (2) gespeicherten Daten an einen mobilen Rechner (5); und
Anzeigen der von der Videokamera (2) empfangenen Daten auf einem Display (105) des mobile Rechners (5), wobei die von der zumindest einen Messeinrichtung (4) gewonnenen Daten (14;15) oder die hieraus erzeugten Daten (16;17) als zusätzliche Daten synchron überlagert oder eingefügt in die Video-Bilddaten (9;19;29) gezeigt werden,
wobei das Verfahren ferner aufweist:
drahtloses Übertragen der von der Videokamera (2) aufgenommenen Video-Bilddaten an den mobile Rechner (5) zur Anzeige auf dem Display (105) des mobile Rechners, derart, dass der mobile Rechner als Sucher für die Video-Kamera arbeitet, wobei die übertragenen Video-Bilddaten eine geringere Datenauflösung haben als die in dem Speichermedium (3) gespeicherten Video-Bilddaten (9;19;29).

2. Verfahren nach Anspruch 1, ferner mit:
Anzeigen von einem oder mehreren Elementen auf dem Display (105) des mobilen Rechners (5) zur Steuerung der Aufnahme der Video-Bilddaten (9;19;29) durch die Videokamera (2); und
Steuern der Aufnahme der Video-Bilddaten (9;19;29) durch die Videokamera (2) gemäß einer empfangenen Nutzerauswahl von einem der angezeigten Steuerungselemente, die drahtlos vom mobilen Rechner (5) zur Videokamera (2) übertragen werden, derart, dass der mobile Rechner als Fernbedienung für die Videokamera dient.

3. Verfahren nach Anspruch 2, wobei das eine oder die mehreren Steuerungselemente folgendes veranlassen: Starten, Stoppen oder Unterbrechen der Aufnahme der Video-Bilddaten (9;19;29) durch die Videokamera (2).

4. Verfahren nach einem der vorhergehenden Ansprüche, ferner mit:
Empfangen einer Nutzer-Auswahl auf dem mobilen Rechner (5) von zumindest einem Satz von zusätzlichen Bilddaten,
wobei das Anzeigen der von der Videokamera (2) empfangenen Daten umfasst: Darstellen der von der zumindest einen Messeinrichtung (4) gewonnenen Daten (14;15) oder der hieraus erzeugten Daten (16; 17), und des zumindest einen Satz von zusätzlichen Bilddaten als zusätzliche Daten, die synchron überlagert oder eingefügt sind in die Video-Bilddaten (9;19;29).

5. Verfahren nach einem der vorhergehenden Ansprüche, wobei das Speichern der Video-Bilddaten (9;19;29) und der Daten (14;15), die von der zumindest einen Messeinrichtung (4) gewonnen wurden, oder der hieraus erzeugten Daten (16;17), in dem Speichermedium (3) der Videokamera (2) aufweist:
Verwenden einer Multiplexereinrichtung in der Videokamera (2), um die von der zumindest einen Messeinrichtung (4) gewonnenen Daten (14; 15) oder die hieraus erzeugten Daten (16; 17) in die VideoBilddaten (9;19;29) zu integrieren, die von der Videokamera aufgenommen wurden; und
Speichern einer Datei, die die integrierten Daten umfasst, in dem Speichermedium (3) der Videokamera.

6. Verfahren nach einem der vorhergehenden Ansprüche, ferner mit:
Drahtloses direktes oder zeitverzögertes Übertragen der von der Videokamera (2) aufgenommenen Video-Bilddaten und der von der zumindest einen Messeinrichtung (4) gewonnenen Daten (14;15), oder der hieraus erzeugten Daten (16;17) an einen entfernten Server (6) über Zwischenschaltung des mobilen Rechners (5).

7. Verfahren nach Anspruch 6, wobei die an den entfernten Server (6) übertragenen Video-Bilddaten eine geringere Datenauflösung haben als die in dem Speichermedium (3) der Videokamera (2) gespeicherten Video-Bilddaten (9;19;29).

8. Verfahren nach einem der vorhergehenden Ansprüche, wobei die zumindest eine Messeinrichtung aufweist: einen Global Positioning System (GPS) Empfänger; eine Geschwindigkeitsmesseinrichtung; eine Beschleunigungsmesseinrichtung; eine Temperaturmesseinrichtung; eine Zeitmesseinrichtung; eine Pulsmesseinrichtung; eine barometrische Höhenmesseinrichtung; und/oder einen elektronischen Kompass.

9. Verfahren nach einem der vorhergehenden Ansprüche, wobei die zumindest eine Messeinrichtung (4) in die Videokamera (2) integriert ist.

10. Verfahren nach einem der vorhergehenden Ansprüche, wobei die Videokamera (2) eine Länge von weniger als 18 cm, vorzugsweise weniger als 14 cm, und eine Höhe und/oder Breite von weniger als 7 cm, vorzugsweise 5 cm aufweist.

11. Verfahren nach einem der vorhergehenden Ansprüche, die drahtlose Übertragung der Daten von der Videokamera (2) zum mobilen Rechner (5) über eine Bluetooth- oder WIFI-Schnittstelle erfolgt.

12. Verfahren nach einem der vorhergehenden Ansprüche, wobei der mobile Rechner (5) ein Mobiltelefon mit Rechnerfunktion ist.

13. Videodaten-Kommunikationssystem mit:
einer Videokamera (2) zur Aufnahme von Video-Bilddaten (9;19;29) während der Ausführung einer Aktivität oder eines Sports durch einen Nutzer, wobei die Videokamera an einem Helm oder einem Sportgerät befestigbar ist, das mit dem Nutzer während der Aufnahme verknüpft ist;
zumindest einer Messeinrichtung (4) zur Gewinnung von Daten (14;15) während der Ausführung der Aktivität oder des Sports, wobei die Daten mit dem Nutzer oder der Videokamera (2) verknüpft sind; und
Software, die von einem mobilen Rechner (5) ausführbar ist,
wobei die Videokamera (2) ferner aufweist:
Mittel zum Speichern der Video-Bilddaten (9;19;29) und der Daten (14;15), die von der zumindest einen Messeinrichtung (4) gewonnen wurden, oder von hieraus erzeugten Daten (16;17) in einem Speichermedium (3) der Videokamera (2);
Mittel zum drahtlosen Übertragen von Daten von der Videokamera (2) zu dem mobilen Rechner (5),
wobei die Software, wenn sie vom mobilen Rechner (5) ausgeführt wird, den mobilen Rechner zur Ausführung eines Verfahrens veranlasst, das aufweist:
Empfangen von zumindest einem Teil der im Speichermedium (3) der Videokamera (2) gespeicherten Daten von der Videokamera (2), und Anzeigen der von der Videokamera (2) empfangenen Daten auf einem Display (105) des mobile Rechners (5), wobei die von der zumindest einen Messeinrichtung (4) gewonnenen Daten (14;15) oder die hieraus erzeugten Daten (16;17) als zusätzliche Daten synchron überlagert oder eingefügt in die Video-Bilddaten (9;19;29) gezeigt werden;
Empfangen der Video-Bilddaten von der Videokamera (2), wobei die Video-Bilddaten eine geringere Datenauflösung haben als die in dem Speichermedium (3) der Videokamera gespeicherten VideoBilddaten (9;19;29), und Anzeigen der empfangenen Video-Bilddaten auf dem Display (105) des mobilen Rechners (5), derart, dass der mobil Rechner als Sucher für die Videokamera (2) arbeitet.

14. System nach Anspruch 13, ferner mit dem mobilen Rechner (5).

15. System nach Anspruch 13 oder 14, wobei der mobile Rechner ein Mobiltelefon mit Rechnerfunktion ist.
